# EUROPEAN PATENT SPECIFICATION

(11) **EP 3 667 207 B1**
(45) Date of publication and mention of the grant of the patent: **14.05.2025**
(21) Application number: 18845019.1
(22) Date of filing: 03.08.2018
(51) Int. Cl.: F25D 11/00, B60H 1/32, B60P 3/20, B60R 16/02, B60R 16/04

(54) **CONTROL DEVICE, TRANSPORT REFRIGERATION SYSTEM, AND CONTROL METHOD**
STEUERVORRICHTUNG, TRANSPORTKÜHLSYSTEM, UND STEUERVERFAHREN
DISPOSITIF DE COMMANDE, SYSTÈME DE RÉFRIGÉRATION DANS LES TRANSPORTS, PROCÉDÉ DE COMMANDE

(30) Priority: 07.08.2017 JP 2017152738
(43) Date of publication of application: 17.06.2020
(73) Proprietor: Mitsubishi Heavy Industries Thermal Systems, Ltd., Tokyo, 100-8332 (JP)
(72) Inventor: NARITA, Sadaharu, Tokyo 108-8215 (JP); KAI, Masakazu, Tokyo 108-8215 (JP); MIZUNO, Yuichiro, Tokyo 108-8215 (JP)
(74) Representative: Henkel & Partner mbB
(86) International application number: PCT/JP2018/029288
(87) International publication number: WO 2019/031419

(56) References cited:
- WO-A1-2009/029205
- WO-A1-2012/138500
- WO-A1-2014/106225
- JP-A- 2000 283 622
- JP-A- 2001 324 253
- JP-A- 2004 156 859
- JP-A- 2005 061 697
- JP-A- 2013 252 844
- JP-A- H0 431 123
- JP-A- H11 304 327
- JP-A- H11 304 327
- US-A- 5 265 435
- US-A1- 2004 069 000
- US-A1- 2005 035 657
- US-A1- 2008 276 913
- US-A1- 2009 120 115
- US-A1- 2010 259 222
- US-A1- 2016 018 145

## Description

### Technical Field

The present invention relates to a transport refrigeration system that refrigerates a load compartment of a vehicle, a control device therefor, a control method, and a charging rate calculation method. This application claims priority based on Japanese Patent Application No. 2017-152738, filed on August 7, 2017, the content of which is incorporated herein by reference.

### Background Art

An electric transport refrigeration system including a power generator that is driven by an engine of a vehicle, and a refrigerator that operates with power generated by the power generator is provided. The generated power of the power generator changes with fluctuation of a rotation speed of the engine. Accordingly, there is a need to meet load power of the refrigerator to a condition that the engine rotates at the lowest speed and the generated power of the power generator is the smallest, and power needed for setting a temperature of a cold insulation storage to a desired target temperature may be hardly obtained. In contrast, a transport refrigeration system is known that is mounted with a secondary battery storing generated power in a case where the generated power of a power generator is large and also supplies power from the secondary battery to the refrigerator in a case where the generated power of the power generator is small, thereby coping with the above-described problem.

PTL 1 discloses a technique that, in control for driving and stopping a power generator of a so-called microhybrid vehicle having a structure, in which power generated by the power generator with drive of an engine is stored in the secondary battery, extends an interval from the drive to the stop of the power generator in a case where engine efficiency is high, and reduces the interval from the drive to the stop when the engine efficiency becomes low, thereby achieving improvement of fuel efficiency performance of a battery while reducing a load of the engine in a case where the engine efficiency is low.

### Citation List

### Patent Literature

[PTL 1] Japanese Unexamined Patent Application Publication No. 2016-203973
[PTL 2] WO 2012/138500 A1
[PTL 3] JP H11 304327 A
[PTL 4] WO 2009/029205 A1
[PTL 5] US 5 265 435 A
[PTL 6] US 2008/276913 A1
[PTL 7] US 2010/259222 A1 PTL 2 discloses that a refrigeration system having a refrigeration unit for providing temperature conditioned air to a temperature controlled space, an engine and an electric generation device driven by the engine, is provided with a battery system for supplying electric power. A method of operating the transport refrigeration includes, during a high cooling demand mode, operating the engine to drive the electric generation device for supplying electric power and simultaneously employing the battery system for supplying electric power to jointly power the plurality of power demand loads of the refrigerant unit.

PTL3 discloses that a refrigerant plant for a vehicle is equipped with a compressor for compressing the refrigerant for freezing, a generator driven by the engine of a vehicle, a battery charged by the generator, a commercial power input part for taking in power from the commercial power source, and a power converter for converting the power inputted from the power source into the power for driving the motor of the compressor and supplying it to the motor of the compressor. The generator, the commercial power input part AC, and the battery are connected in parallel with the power converter.

PTL4 discloses that a refrigeration power system for cooling a storage compartment in a vehicle includes a power source independent of a vehicle battery. The power source provides power to a refrigeration unit that includes a variable speed compressor. The refrigeration power system determines available power and varies the speed of the compressor accordingly to provide a lesser amount of cooling at start-up or when the available power value is less than a required power value. The power system operates the variable speed compressor at the required power value when the available power value is large enough to provide a cooling capacity so that the storage compartment obtains a preselected temperature.

PTL5 discloses that a vehicle refrigeration system is provided for cooling an enclosed space within a trailer. The vehicle refrigeration system includes a compressor unit operatively coupled to a condenser and an evaporator. The compressor unit includes an electric compressor motor coupled to a power controller for coupling motor to either a primary or a secondary source of power, and cycling the compressor motor on and off responsive to a signal from a temperature sensor.

PTL6 discloses a method of operating an internal combustion engine coupled in a hybrid powertrain, the method comprising of extracting waste energy from a component of an electrical power system of the hybrid powertrain, and adjusting intake air temperature during homogeneous charge compression ignition operation of the engine by using said extracted waste energy. PTL 7 discloses a battery charge management system of the prior art.

### Summary of Invention

### Technical Problem

However, in the above-described configuration in which the secondary battery is added as a power supply of the refrigerator, when an operation situation in which the secondary battery is used occurs, the operation is often controlled while lowering the refrigeration ability of the refrigerator, and after all, a sufficient refrigeration ability may not be obtained.

The invention provides a control device, a transport refrigeration system, a control method, capable of solving the above-described problem.

### Solution to Problem

According to the present invention, there is provided a control device as set out in independent claim 1, a transport refrigeration system as set out in independent claim 9, and a control method as set out in independent claim 11. Advantageous developments are defined in the dependent claims.

### Advantageous Effects of Invention

With the control device, the transport refrigeration system, and the control method described above, in the transport refrigeration system having, as a power supply, the power generator that generates power with the drive of the power source of the moving body, and the secondary battery, it is possible to extend an operation time without lowering a refrigeration ability even in a situation in which the power stored in the secondary battery is used.

### Brief Description of Drawings

Fig. 1 is a diagram showing an example of a vehicle including a transport refrigeration system according to an embodiment of the invention.
Fig. 2 is a block diagram showing an example of the transport refrigeration system according to the embodiment of the invention.
Fig. 3 is a diagram showing an example of an output characteristic of a power generator according to the embodiment of the invention.
Fig. 4 is a diagram showing an example of a constant-voltage charging characteristic of a battery according to the embodiment of the invention.
Fig. 5 is a functional block diagram showing an example of a controller in the transport refrigeration system according to the embodiment of the invention.
Fig. 6 is a diagram illustrating charging and discharging control of the transport refrigeration system according to the embodiment of the invention.
Fig. 7 is a flowchart showing an example of the charging and discharging control of the transport refrigeration system according to the embodiment of the invention.

### Description of Embodiments

### <Embodiment>

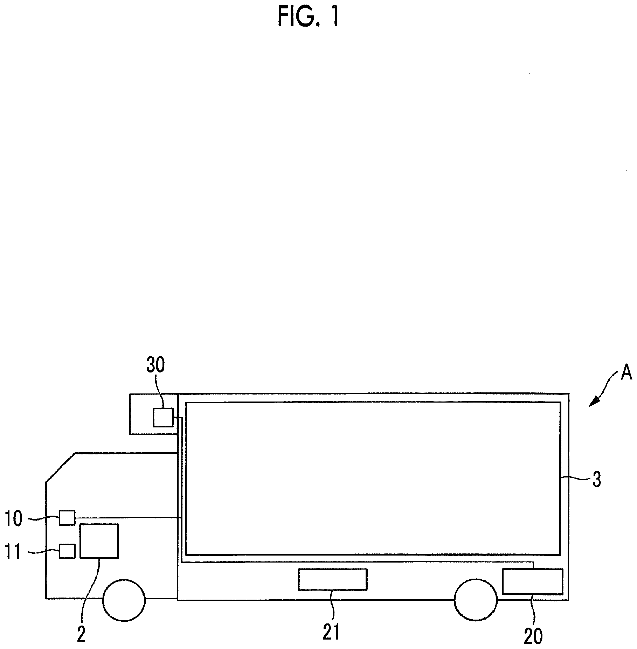

Hereinafter, an air conditioner according to an embodiment of the invention will be described referring to Figs. 1 to 7. Fig. 1 is a diagram showing an example of a vehicle including a transport refrigeration system according to the embodiment of the invention. A vehicle A is, for example, a truck in which a refrigerator is mounted. As shown in the drawing, the vehicle A includes an engine 2 that drives the vehicle A, a cold insulation storage 3 that is mounted in a load compartment, a power generator 10 for a refrigerator that is driven by the engine 2, a power generator 11 for a vehicle that is driven by the engine 2, a battery 20 for a refrigerator, a battery 21 for a vehicle, and a refrigeration unit 30. The power generator 11 for a vehicle and the battery 21 for a vehicle are mounted for the purpose of traveling of the vehicle A or supplying power to electric equipment in the vehicle A. The power generator 10 for a refrigerator and the battery 20 for a refrigerator are mounted for the purpose of supplying power to the refrigeration unit 30. The refrigeration unit 30 operates with power (generated power) generated by the power generator 10 or the generated power of the power generator 10 and power stored in the battery 20 as a power supply, and refrigerates a temperature of the inside of the cold insulation storage 3 to a temperature desired by a user. Rated voltages of the power generator 10 and the battery 20 are, for example, 12 V or 24 V.

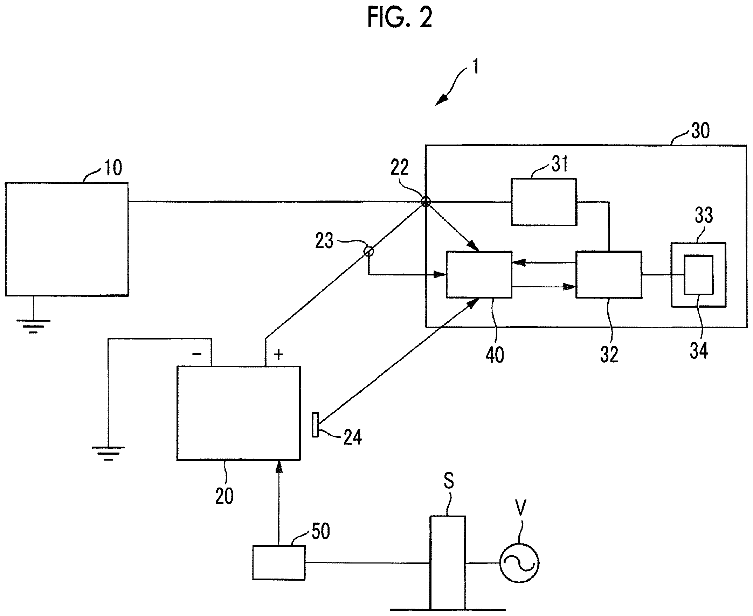

Fig. 2 is a block diagram showing an example of the transport refrigeration system according to the embodiment of the invention. A transport refrigeration system 1 includes the power generator 10, the battery 20, and the refrigeration unit 30. The power generator 10 is a constant-voltage power generator that generates power with rotation of the engine 2. The power generator 10 is connected to the refrigeration unit 30, and the power generated by the power generator 10 is supplied to the refrigeration unit 30. The refrigeration unit 30 refrigerates the cold insulation storage 3 to a desired temperature. The refrigeration unit 30 includes a converter 31, an inverter 32, a refrigerator 33, and a controller 40. The converter 31 boosts power supplied from the power generator 10. The converter 31 outputs the boosted direct-current power to the inverter 32. The inverter 32 converts the direct-current power from the converter 31 to three-phase alternating-current power having a frequency according to a refrigeration load and supplies the three-phase alternating-current power to an electric compressor 34 of the refrigerator 33. The refrigerator 33 includes a refrigerant circuit that has a condenser, an evaporator, an expansion valve, and the like (not shown) starting with the electric compressor 34. In a case where the electric compressor 34 is driven with power supplied from the inverter 32, a refrigerant is sent out and circulated in the refrigerant circuit by the electric compressor 34. With this, the refrigerator 33 refrigerates a space inside the cold insulation storage 3 to a temperature set by the user. The controller 40 controls the operation of the refrigerator 33. For example, the controller 40 controls power supplied to the refrigerator 33 through the inverter 32.

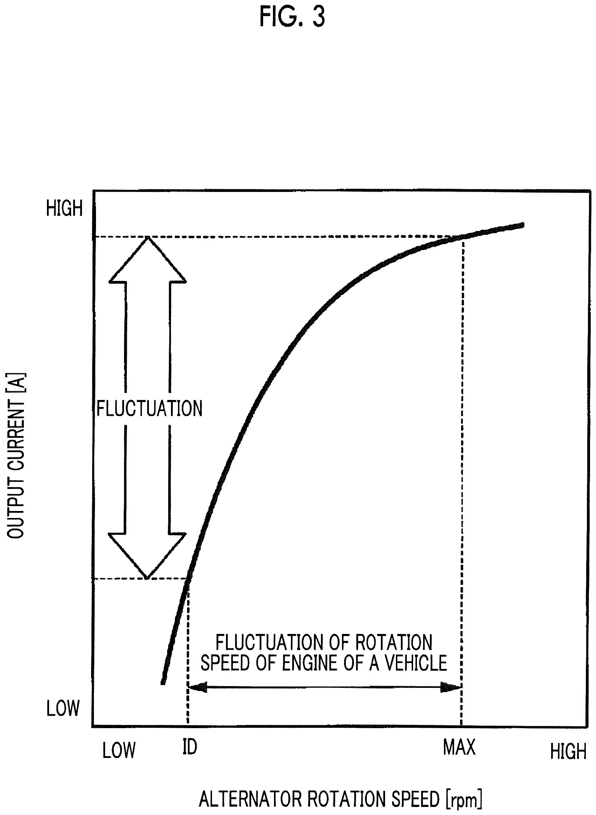

Here, an output characteristic of the power generator 10 will be described referring to Fig. 3. Fig. 3 is a diagram showing an example of the output characteristic of the power generator according to the embodiment of the invention. In Fig. 3, the vertical axis is an output current from the power generator 10, and the horizontal axis is a rotation speed of the power generator 10. In the drawing, reference numeral ID indicates the rotation speed (for example, 1200 to 1600 rpm) of the power generator 10 while the vehicle A is idling, and the output current in this case is, for example, about 40 A. In the drawing, reference numeral MAX indicates the rotation speed (for example, 5000 to 6000 rpm) of the power generator 10 in a case where a rotation speed of the engine of the vehicle A becomes maximum, and the output current in this case is, for example, about 90 A. In this way, the magnitude of the current output from the power generator 10 fluctuates two times or more according to a traveling state of the vehicle A. For this reason, there is a possibility that power is short with solely power supplied to the refrigeration unit 30 through power generation of the power generator 10 depending on a target temperature of the cold insulation storage 3 (a load requested by the refrigerator 33) or the traveling state of the vehicle A. In order to supplement the shortage, the transport refrigeration system 1 includes the battery 20 as an auxiliary power supply.

The battery 20 is a secondary battery that stores power generated by the power generator 10 and supplies the stored power to the refrigeration unit 30. The battery 20 is configured to store surplus power of power (load power) consumed by the refrigeration unit 30 out of the direct-current power converted by the converter 31 in response to an instruction of the controller 40. In a case where power is short with solely the generated power of the power generator 10, the power stored in the battery 20 is configured to be discharged in response to an instruction of the controller 40 and be supplied to the inverter 32. The inverter 32 converts direct-current power from the battery 20 to three-phase alternating-current power having a frequency according to the load power requested by the refrigerator 33 and supplies the three-phase alternating-current power to the electric compressor 34.

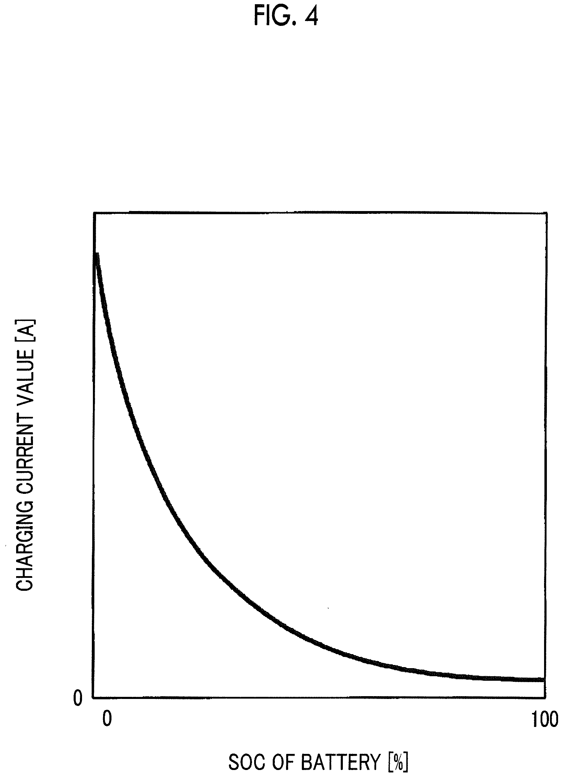

Here, the relationship between a charging current and an SOC will be described referring to Fig. 4. Fig. 4 is a diagram showing an example of a constant-voltage charging characteristic of the battery according to the embodiment of the invention. In Fig. 4, the vertical axis is a value of the charging current, and the horizontal axis is the SOC of the secondary battery. As described above, the output of the power generator 10 is a constant voltage (for example, 14 V or 28 V). Referring to Fig. 4, in a case where the SOC of the battery 20 is low, a large current flows in the battery 20, and when the SOC becomes high, the current flowing in the battery 20 becomes small. For example, while the charging current is about 50 A in a case where the SOC is near zero, the charging current decrease to 2 to 3 A in a case where the SOC exceeds 90%.

A voltage sensor 22 and a current sensor 23 are provided between the battery 20 and the refrigeration unit 30, and a voltage value measured by the voltage sensor 22 and a current value measured by the current sensor 23 are output to the controller 40. The battery 20 is provided with a temperature sensor 24, and a temperature measured by the temperature sensor 24 is output to the controller 40. The controller 40 calculates the state of charge (SOC: charging rate) of the battery 20 using information regarding the voltage value, the current value, and the temperature acquired from the sensors. The controller 40 controls charging and discharging of the battery 20 according to the SOC of the battery 20, the generated power of the power generator 10, and the load power requested by the refrigeration unit 30 while controlling the operation of the refrigerator 33.

The transport refrigeration system 1 may further include means for charging the battery 20 with power supplied from an external power supply and means for supplying power to the refrigerator. For example, the transport refrigeration system 1 further includes a charging device 50, and a charging stand S receives power from an alternating-current power supply V and converts the alternating-current power to direct-current power. Then, in a case where the vehicle A and the charging stand S are connected by a charging cable, the direct-current power is supplied from the charging stand S to the vehicle A side, and the charging device 50 charges the battery 20. With such a configuration, even in a state in which the power generator 10 is not started, it is possible to perform charging to the battery 20 and supply of power to the refrigerator.

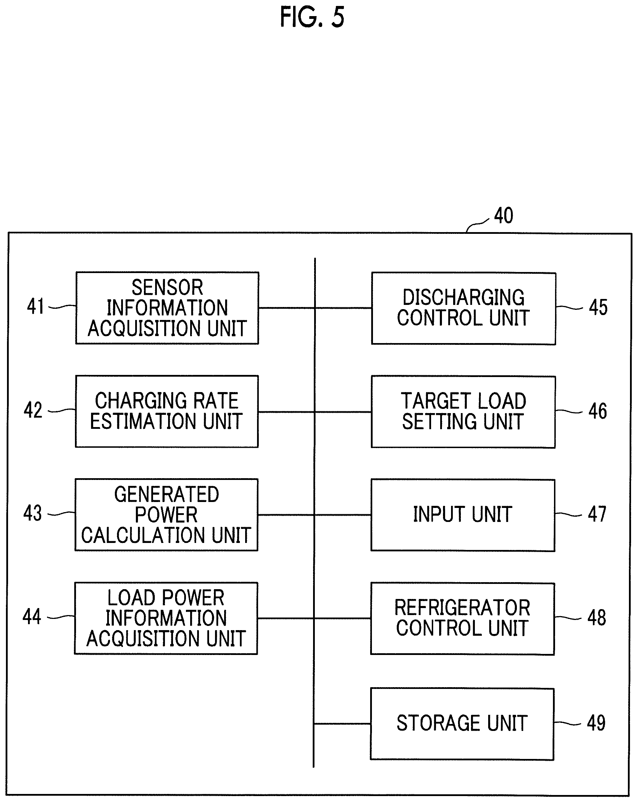

Next, the controller 40 will be described referring to Fig. 5. Fig. 5 is a functional block diagram showing an example of the controller in the transport refrigeration system according to the embodiment of the invention. The controller 40 is, for example, a computer, such as a microcomputer. The controller 40 includes a sensor information acquisition unit 41, a charging rate estimation unit 42, a generated power calculation unit 43, a load power information acquisition unit 44, a charging and discharging control unit 45, a target load setting unit 46, an input unit 47, a refrigerator control unit 48, and a storage unit 49.

The sensor information acquisition unit 41 acquires the voltage value measured by the voltage sensor 22, the current value measured by the current sensor 23, and the temperature measured by the temperature sensor 24. The sensor information acquisition unit 41 acquires a rotation speed from a rotation sensor (not shown) that measures the rotation speed of the power generator 10 (or a rotation sensor that measures the rotation speed of the engine 2).

The charging rate estimation unit 42 calculates the SOC of the battery 20 based on the voltage value and the current value acquired by the sensor information acquisition unit 41. For example, the charging rate estimation unit 42 calculates the SOC (referred to as an initial SOC) of the battery 20 based on an open circuit voltage (OCV) measured by the voltage sensor 22 in a case where a predetermined time has elapsed after the operation of the refrigerator 33 is stopped, and the battery 20 is in a balanced state, a function indicating the relationship between the open circuit voltage and the SOC of the battery 20, and the like. In a case where the refrigerator 33 starts the operation, the charging rate estimation unit 42 integrates the current value (charging current or discharging current) measured by the current sensor 23 to the initial SOC to calculate a current SOC of the battery 20 (current integration method). Since the battery 20 changes in resistance value according to the temperature, temperature correction may be performed on the calculated SOC. For example, the charging rate estimation unit 42 calculates a correction amount according to the temperature measured by the temperature sensor 24 using a predetermined SOC correction value calculation model for defining a correction amount of the SOC according to the temperature of the battery 20 and adds the correction amount to the SOC calculated by the current integration method to calculate the SOC.

The generated power calculation unit 43 calculates the generated power of the power generator 10. For example, the generated power calculation unit 43 calculates the generated power (W) by obtaining an output current from the rotation speed of the power generator 10 acquired by the sensor information acquisition unit 41 based on a graph illustrated in Fig. 3 and multiplying an output voltage (for example, 24 V) by the output current.

The load power information acquisition unit 44 acquires information regarding power needed for the operation of the refrigerator 33. For example, the load power information acquisition unit 44 acquires information regarding power consumption from the inverter 32. For example, the load power information acquisition unit 44 acquires a detection value of power consumption of the refrigerator 33.

In a case where the generated power of the power generator 10 is smaller than the load power of the refrigerator 33, the charging and discharging control unit 45 supplies the power stored in the battery 20 to the inverter 32 when the SOC of the battery 20 is equal to a predetermined threshold value (first threshold value) or more. In this case, the charging and discharging control unit 45 permits the load power at which the SOC of the battery 20 decreases, and supplies power matching a shortage obtained by subtracting the generated power from the load power from the battery 20 to the inverter 32. In a case where the power stored in the battery 20 is supplied to the inverter 32, the charging and discharging control unit 45 stops the supply of the power from the battery 20 to the inverter 32 when the SOC of the battery 20 becomes smaller than a predetermined threshold value (second threshold value). In a situation in which the power stored in the battery 20 is not supplied to the inverter 32, the charging and discharging control unit 45 supplies a surplus of the power generated by the power generator 10 to the battery 20 to charge the battery 20.

In a case where the supply of the power from the battery 20 to the inverter 32 is performed, the target load setting unit 46 reduces the load such that the amount of power consumed by the load becomes smaller than the amount of power generated by the power generator 10 when the SOC of the battery 20 becomes smaller than the second threshold value. For example, in a case where the generated power of the power generator 10 is smaller than the load power of the refrigerator 33, the target load setting unit 46 reduces the load power such that the load power of the refrigerator 33 becomes smaller than the generated power of the power generator 10 when the SOC of the battery 20 becomes smaller than the second threshold value. Alternatively, the target load setting unit 46 may reduce the load power, for example, such that a predetermined charging current (for example, a charging current according to the SOC based on a charging and discharging current illustrated in Fig. 4) flows into the battery 20. Otherwise, for example, the load so far may be maintained for a time as long as possible, and then, the load is decreased sharply, whereby control may be performed such that the amount of power consumption of the load until a predetermined time elapses after the SOC falls below the second threshold value becomes smaller than the amount of power generated by the power generator 10. On the other hand, in a case where the SOC of the battery 20 is equal to the second threshold value or more, and the total of the amount of power generated by the power generator 10 and the amount of power supplied from the battery 20 can meet the amount of power consumed by the load, the target load setting unit 46 maintains the load as it is.

The input unit 47 receives an input of information regarding the target temperature of the cold insulation storage 3 or information for instructing the start and stop of the refrigerator 33 from the user. The refrigerator control unit 48 controls the operation of the refrigerator 33. For example, in a case where the user performs an operation to start the operation of the refrigerator 33, the refrigerator control unit 48 outputs a control signal for instructing the start to the refrigerator 33 side through the inverter 32. In the refrigerator 33, the electric compressor 34 is started based on the control signal, and the refrigerator 33 starts the operation. In a case where the user sets the target temperature of the cold insulation storage 3, the refrigerator control unit 48 generates a control signal according to the target temperature based on a temperature of the inside of the cold insulation storage 3, an ambient temperature, or the like and performs frequency adjustment or the like of the inverter 32 to control an operation state of the refrigerator 33. For example, in a case where the user performs an operation to stop the operation of the refrigerator 33, the refrigerator control unit 48 outputs a control signal for stopping the operation of the refrigerator 33, the refrigerator 33 stops the operation in response to the control signal. The storage unit 49 stores various kinds of information, such as the first threshold value and the second threshold value.

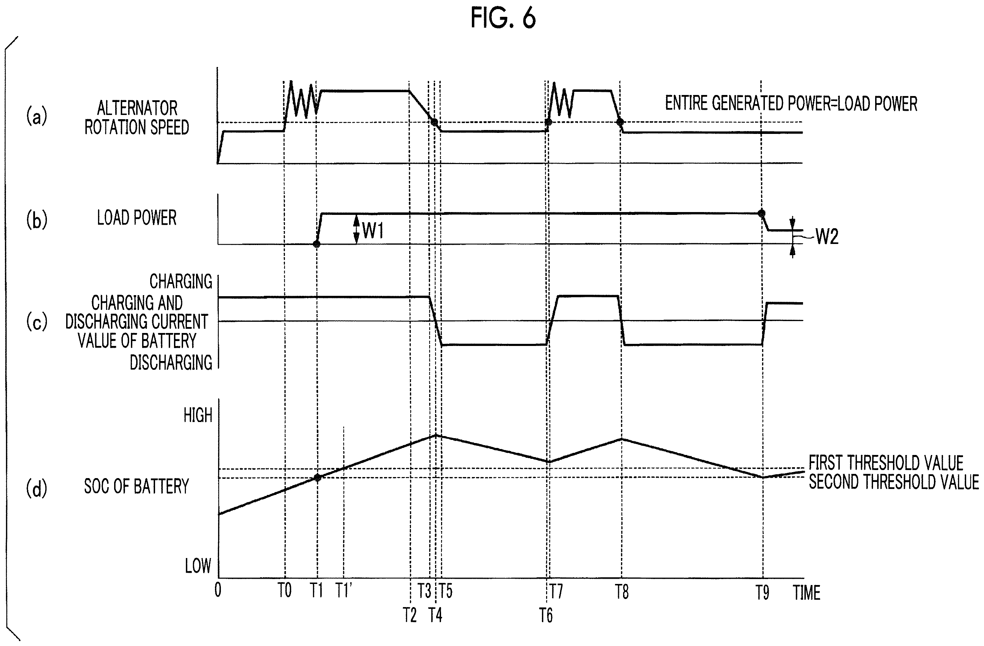

Next, charging and discharging control of the embodiment will be described referring to Fig. 6. Fig. 6 is a diagram illustrating the charging and discharging control of the transport refrigeration system according to the embodiment of the invention. Fig. 6 shows the relationship of a graph ((a) of Fig. 6) of a frequency of the power generator 10 in a time series, a graph ((b) of Fig. 6) of the load power of the refrigerator 33 in a time series, a graph ((c) of Fig. 6) of the charging and discharging current of the battery 20 in a time series, and a graph ((d) of Fig. 6) of the SOC of the battery 20 in a time series. The horizontal axis of each graph indicates the lapse of time, and the same position on the horizontal axis of each graph indicates the same time.

### (Time 0 to T0)

First, at time 0, the engine 2 of the vehicle A is started. In a case where the engine 2 is started, the rotation speed of the power generator 10 increases according to the rotation speed of the engine 2 and is maintained at a constant rotation speed in an idling state ((a) of Fig. 6). In this case, the refrigerator 33 is not operated, and accordingly, the load power is zero ((b) of Fig. 6). Since the load power is zero, the entire generated power of the power generator 10 for a refrigerator becomes a surplus. The charging and discharging control unit 45 assigns the entire generated power of the power generator 10 to the charging of the battery 20 ((c) of Fig. 6). In the meantime, the SOC of the battery 20 increases ((d) of Fig. 6).

### (Time T0 to T1)

In a case where the vehicle A starts traveling at time T0, the rotation speed of the power generator 10 increases and fluctuates for a while ((a) of Fig. 6). Next, the refrigerator 33 is stopped, and the load power is zero ((b) of Fig. 6). The charging and discharging control unit 45 assigns the entire generated power of the power generator 10 to the charging of the battery 20 ((c) of Fig. 6). The SOC of the battery 20 continues to increase ((d) of Fig. 6).

### (Time T1 to T2)

Thereafter, the vehicle A travels at a constant speed. The rotation speed of the power generator 10 becomes constant ((a) of Fig. 6). On the other hand, the refrigerator 33 starts the operation at time T1, and performs the operation with constant load power w1 with respect to the target temperature set by the user ((b) of Fig. 6). In the example, it is assumed that the generated power of the power generator 10 is greater than the load power w1 according to the operation of the refrigerator 33. In this case, the charging and discharging control unit 45 assigns the surplus (the generated power - the load power w1) of the generated power of the power generator 10 to the charging of the battery 20 ((c) of Fig. 6). In the example, it is possible to charge the same power even after time T1. Next, the SOC of the battery 20 continues to increase ((d) of Fig. 6). The SOC of the battery 20 becomes the first threshold value at time T1'. The first threshold value is a threshold value of the SOC at which the start of discharging of the battery 20 is permitted in the charging and discharging control of the embodiment.

In a case where the SOC of the battery 20 becomes equal to the first threshold value or more, and the load power w1 exceeds the generated power, the charging and discharging control unit 45 starts the supply of the power from the battery 20 to the refrigeration unit 30. As described below, the charging and discharging control unit 45 performs control of charging and discharging and control of the load power such that the SOC of the battery 20 does not fall below the second threshold value (for example, the SOC in a case where the refrigerator 33 starts the operation). It is assumed that the SOC (the SOC at time T1) in a case where the refrigerator 33 starts the operation is the second threshold value. The second threshold value is a lowest value of the SOC that the battery 20 can take in the charging and discharging control of the embodiment. That is, even though the battery 20 is being discharged, the SOC of the battery 20 is controlled to be maintained to be the second threshold value or more by the charging and discharging control unit 45. A condition may be made that the SOC of the battery 20 becomes equal to the second threshold value or more at the time at which the refrigerator 33 starts the operation.

### (Time T2 to T5)

Thereafter, the vehicle A reduces the speed, and accordingly, the rotation speed of the power generator 10 also decreases ((a) of Fig. 6). The refrigerator 33 continues the operation with the same load power w1 ((b) of Fig. 6). With a decrease in the power generated by the power generator 10, at time T3, a charging current value flowing in the battery 20 by the charging and discharging control unit 45 starts to decrease ((c) of Fig. 6). At time T4, the magnitude of the power generated by the power generator 10 becomes equal to the magnitude of the load power w1 of the refrigerator 33. After time T4, the power generated by the power generator 10 becomes smaller than the load power w1 of the refrigerator 33. Then, when time T5 is reached, traveling of the vehicle A is brought into the idling state. Accordingly, the charging and discharging control unit 45 stops the charging of the battery 20 at time T4. After time T4, since the generated power of the power generator 10 becomes short with respect to the load power w1 requested by the refrigerator 33, the charging and discharging control unit 45 covers the shortage (the load power w1 - the generated power) with discharging from the battery 20. In this case, a condition is made that the SOC of the battery 20 becomes equal to the first threshold value or more. In the example, at time T4, since the SOC of the battery 20 becomes equal to the first threshold value or more ((d) of Fig. 6), the condition is satisfied. The charging and discharging control unit 45 discharges the battery 20 ((c) of Fig. 6), and supplies the power stored in the battery 20 to the refrigerator 33 through the inverter 32. With this, after time T4, the SOC of the battery 20 starts to decrease ((d) of Fig. 6). Even though the supply of the power from the battery 20 is started, in a case where the SOC is equal to the second threshold value or more, the load power is maintained at w1 by the target load setting unit 46, and thus, the operation of the refrigerator 33 is not limited. Accordingly, even after time T4, the temperature of the cold insulation storage 3 is controlled to a desired target temperature.

### (Time T5 to T6)

For a while from time T5, the vehicle A is stopped in the idling state. In the interim, the rotation speed of the power generator 10 is constant ((a) of Fig. 6). In the meantime, since the generated power of the power generator 10 falls below the load power w1, and the SOC of the battery 20 is equal to the second threshold value or more, the charging and discharging control unit 45 continues the discharging of the battery 20 ((c) of Fig. 6). Accordingly, the SOC of the battery 20 continues to decrease ((d) of Fig. 6). The load power is maintained at w1 by the target load setting unit 46 ((b) of Fig. 6). In the meantime, the temperature of the cold insulation storage 3 is controlled to the target temperature desired by the user.

### (Time T6 to T8)

When time T6 is reached, the vehicle A starts traveling, and the rotation speed and the generated power of the power generator 10 are increasing. With the increase in generated power of the power generator 10, the charging and discharging control unit 45 decreases discharge power of the battery 20 ((c) of Fig. 6), and performs control such that the total of the generated power of the power generator 10 and the discharge power of the battery 20 becomes equal to the load power w1. Thereafter, at time T7, when the generated power of the power generator 10 becomes equal to the load power w1 of the refrigerator 33 ((a) of Fig. 6), the charging and discharging control unit 45 stops the discharging of the battery 20 at time T7 ((c) of Fig. 6). Thereafter, the rotation speed of the power generator 10 continues to increase, and the generated power also increases and exceeds the load power w1. Accordingly, after time T7, the charging and discharging control unit 45 supplies the surplus of the generated power of the power generator 10 to the battery 20 to charge the battery 20 ((c) of Fig. 6). With this, the SOC of the battery 20 increases.

### (After Time T8)

At time T8, the vehicle A further reduces the speed and is brought into the idling state. The rotation speed and the generated power of the power generator 10 decrease ((a) of Fig. 6). Then, when the generated power of the power generator 10 becomes equal to the load power w1 or less, the charging and discharging control unit 45 discharges the battery 20 based on a state in which the SOC of the battery 20 is equal to the first threshold value or more and supplements the shortage of the generated power with respect to the load power ((c) of Fig. 6). With this, the SOC of the battery 20 decreases ((d) of Fig. 6). In the meantime, the operation of the refrigerator 33 is not limited based on a state in which the SOC of the battery 20 is equal to the second threshold value or more, and the temperature of the cold insulation storage 3 is controlled to the target temperature desired by the user.

When time T9 is reached, the SOC of the battery 20 reaches the second threshold value. When this happens, the charging and discharging control unit 45 stops the discharging of the battery 20 at time T9 ((c) of Fig. 6). Since the vehicle A continues to be in the idling state even after time T9, the generated power of the power generator 10 still falls below the load power w1. Since the discharging of the battery 20 is stopped based on a state in which the SOC decreases and reaches the second threshold value, it is not possible to maintain the load power w1 as it is. Accordingly, the target load setting unit 46 reduces the load such that the amount of power consumed by the load becomes equal to the amount of power generated by the power generator 10 or less. For example, the target load setting unit 46 reduces the load power from w1 to w2 ((b) of Fig. 6). For example, the load power w2 is set to a value smaller than the generated power of the power generator 10 in a case where the vehicle A is brought into the idling state by the target load setting unit 46. The load power is reduced to w2, whereby surplus power remains even though the generated power of the power generator 10 is supplied to the refrigerator 33. The charging and discharging control unit 45 supplies the surplus power to the battery 20 to charge the battery 20. With this, the SOC of the battery 20 increases, and then, is recovered to the first threshold value or more. In a case where the SOC of the battery 20 is recovered to the first threshold value or more, the charging and discharging control unit 45 enables the discharging of the battery 20. In a case where the SOC of the battery 20 is recovered to the first threshold value or more, the target load setting unit 46 may return the load power from w2 to w1 as an original value. For example, in a case where the temperature of the cold insulation storage 3 is sufficiently refrigerated, or the like, control may be performed such that the load power w2 is significantly reduced (for example, w2 = 0 may be temporarily set), a charging current as large as possible (for example, a maximum charging current according to the SOC based on the graph illustrated in Fig. 4) flows in the battery 20 to rapidly recover the SOC of the battery 20, and the original target temperature is returned in a time as short as possible. There is a possibility that the load power decreases to w2 to cause degradation of a refrigeration ability, and the temperature of the cold insulation storage 3 increases; however, the charging and discharging control of the embodiment is performed, whereby it is possible to extend the operation time of the refrigerator 33 while maintaining the load power w1 according to the target temperature desired by the user.

In the related art, in a situation in which the refrigerator is operated with power from the battery, control is often performed such that the refrigeration ability of the refrigerator 33 is saved (the target temperature increases) in order to restrain battery exhaustion. In such control, in a case where the time for which the generated power is short is continued long, and in the meantime, the refrigeration ability of the refrigerator 33 is saved. With this, there is a high possibility that the temperature of the cold insulation storage 3 increases. In contrast, with the charging and discharging control of the embodiment, even in an operation state in which the battery 20 is used, it is possible to extend the time for which the refrigeration ability of the refrigerator 33 is utilized to the maximum without saving the refrigeration ability of the refrigerator 33 according to the SOC of the battery 20. With this, it is possible to reduce a risk that an inside temperature of the cold insulation storage 3 is deviated from the target temperature desired by the user.

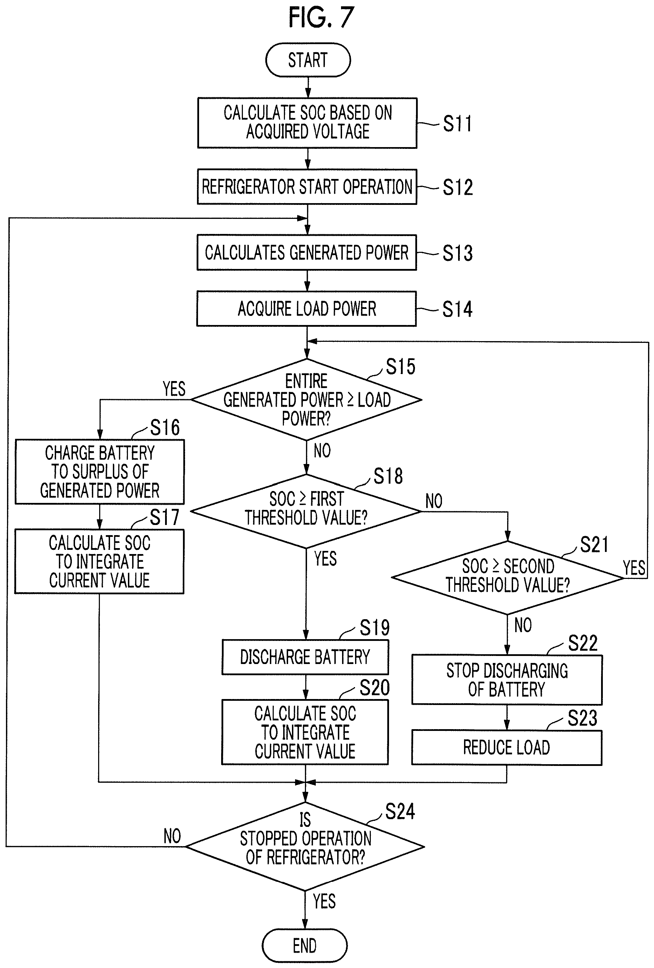

Next, a flow of processing of the charging and discharging control of the embodiment in a state in which the engine 2 is being driven will be described. Fig. 7 is a flowchart showing an example of the charging and discharging control of the transport refrigeration system according to the embodiment of the invention. First, the sensor information acquisition unit 41 acquires the open circuit voltage of the battery 20 measured by the voltage sensor 22 in a state regarded as a no-load state in which the refrigerator 33 is not started. Next, the charging rate estimation unit 42 calculates the initial SOC of the battery 20 based on the acquired voltage (Step S11). The charging rate estimation unit 42 records the value of the calculated initial SOC in the storage unit 49. Next, the refrigerator 33 starts the operation (Step S12). In a case where the refrigerator 33 starts the operation, the refrigerator control unit 48 drives the electric compressor 34 through the inverter 32. The refrigerator control unit 48 controls the frequency of the inverter 32 to operate the refrigerator 33 such that the inside temperature of the cold insulation storage 3 becomes the target temperature set by the user through the input unit 47 according to various operation conditions, such as the inside temperature of the cold insulation storage 3 and an outside temperature.

The generated power calculation unit 43 calculates the generated power by obtaining the output current from the rotation speed of the power generator 10 acquired by the sensor information acquisition unit 41, for example, based on the graph of Fig. 3 and multiplying the output current by the voltage (Step S13). The generated power calculation unit 43 outputs the value of the calculated generated power to the charging and discharging control unit 45. The load power information acquisition unit 44 acquires the value of the load power from the inverter 32 (Step S14). The load power information acquisition unit 44 outputs the acquired value of the load power to the charging and discharging control unit 45. The charging and discharging control unit 45 compares the generated power with the load power (Step S15). In a case where the generated power is equal to the load power or more (Step S15; Yes), the charging and discharging control unit 45 supplies the surplus of the generated power obtained by subtracting the load power from the generated power to the battery 20 to charge the battery 20 (Step S16). The sensor information acquisition unit 41 acquires the value of the charging current flowing in the battery 20 measured by the current sensor 23. The charging rate estimation unit 42 integrates the current value measured by the current sensor 23 and adds the integrated value to the initial SOC to calculate the SOC of the battery 20 during charging (Step S17). In this case, the charging rate estimation unit 42 may correct the SOC based on the internal temperature of the battery 20 measured by the temperature sensor 24. The charging rate estimation unit 42 records the value of the calculated SOC in the storage unit 49.

In a case where the generated power is smaller than the load power (Step S15; No), the charging and discharging control unit 45 determines whether or not the SOC of the battery 20 is equal to the first threshold value or the more (Step S18). In a case where the SOC of the battery 20 is equal to the first threshold value or more (Step S18; Yes), the charging and discharging control unit 45 discharges the battery 20 and supplies the shortage of the power obtained by subtracting the generated power from the load power from the battery 20 to the inverter 32 (Step S19). The sensor information acquisition unit 41 acquires the value of the discharging current flowing from the battery 20 measured by the current sensor 23. The charging rate estimation unit 42 integrates the current value measured by the current sensor 23 and calculates the SOC of the battery 20 during discharging (Step S20). As in Step S17, the charging rate estimation unit 42 may correct the SOC according to the temperature.

In a case where the SOC of the battery 20 is less than the first threshold value (Step S18; No), subsequently, the charging and discharging control unit 45 determines whether or not the SOC of the battery 20 is equal to the second threshold value or more (Step S21). In a case where the SOC of the battery 20 is equal to the second threshold value or more (Step S21; Yes), the processing after Step S15 is repeated. In a case where the SOC of the battery 20 is less than the second threshold value (Step S21; No), the charging and discharging control unit 45 stops the discharging of the battery 20 (Step S22). Since the load of the refrigerator 33 cannot be supplemented with solely the generated power of the power generator 10, the target load setting unit 46 reduces the load such that the amount of power consumed by the load becomes smaller than the amount of power generated by the power generator 10 (Step S23). For example, the target load setting unit 46 sets a target value of the load power so as to be equal to the generated power of the power generator 10 or less regardless of the traveling state of the vehicle A and outputs the newly set target value of the load power to the refrigerator control unit 48. Alternatively, for example, a reference value of the charging current to the battery 20 may be provided based on the graph of Fig. 4, and the load power may be set such that the value of the charging current measured by the current sensor 23 becomes equal to the reference value or more. The refrigerator control unit 48 decreases the frequency of the inverter 32 according to the load power set by the target load setting unit 46. With this, it is possible to decrease the load power according to the operation of the refrigerator 33.

Next, the refrigerator control unit 48 determines whether or not to stop the operation of the refrigerator 33 (Step S24). For example, in a case where the user inputs an operation to stop the operation of the refrigerator 33 through the input unit 47, the refrigerator control unit 48 determines to stop the operation of the refrigerator 33. In a case where the operation of the refrigerator 33 is stopped (Step S24; Yes), the flowchart ends.

In a case where the operation of the refrigerator 33 is continued (Step S24; No), the processing from Step S13 is repeated. For example, in a case where the load is reduced in the processing of Step S23, the load decreases to cause a decrease in rotation speed of the electric compressor 34, and the refrigeration ability for the cold insulation storage 3 decreases; however, in the determination of Step S15, the generated power becomes equal to the load power or more, and the charging and discharging control unit 45 charges the battery 20. With this, the SOC of the battery 20 is gradually recovered, and then, when the SOC of the battery 20 becomes equal to the first threshold value or more, the battery 20 is brought into a state capable of being discharged again.

According to the embodiment, since the excess or shortage of the generated power of the power generator 10 with respect to the load power can be supplemented by the battery 20, for example, it is possible to perform a stable operation of the refrigerator 33 even in a case where fluctuation in generated power of the power generator 10 is large due to sharp change in traveling state of the vehicle A (start or stop, change in traveling speed, or the like). For example, it is possible to exhibit the same refrigeration ability as during traveling even though the vehicle A is stopped in the idling state. In particular, in a state in which the SOC of the battery 20 is high, it is possible to supply the load power that exceeds the generated power of the power generator 10, and to provide a large refrigeration ability. When the SOC of the battery 20 is equal to the second threshold value or more, until the SOC finally decrease to the second threshold value or less, and the discharging of the battery 20 is stopped, it is possible to continuously supply the load power equal to the generated power of the power generator 10 or more. Accordingly, compared to the control in the related art that the refrigeration ability is saved in a case where the discharging of the battery is performed, it is possible to exhibit the refrigeration ability for a long time, and thus, it becomes easy to control the inside temperature of the cold insulation storage 3 to a desired temperature.

In a situation in which the generated power exceeds the load power, the battery 20 is charged with the surplus power and the SOC of the battery 20 is maintained high, whereby it is easy to maintain a state in which power can be supplied from the battery 20, and it is possible to implement a more stable operation. In a scene where the discharging of the battery 20 becomes large, it is possible to maintain the SOC to be equal to the second threshold value or more, and thus, it is possible to restrain early deterioration (sulfation) of the battery 20 due to excessive discharging. Furthermore, it is possible to indirectly ascertain the excess or shortage of the generated power with respect to the load power with the charging and discharging current value to the battery 20.

In performing the above-described control, although the charging and discharging is controlled based on the SOC of the battery 20 or the load requested by the refrigerator 33 is reduced, to this end, there is a need to accurately detect the SOC of the battery 20. With the charging rate estimation unit 42 of the embodiment, it is possible to calculate the SOC of the battery 20 in real time based on the charging and discharging current from the battery 20.

The constituent elements in the above-described embodiment can be appropriately replaced with the known constituent elements without departing from the spirit and scope of the invention. The technical scope of the invention is not limited to the above-described embodiment, and various alterations may be made without departing from the spirit and scope of the invention. For example, the transport refrigeration system 1 can be applied to an aircraft or a ship, as well as a vehicle. The controller 40 is an example of a control device. The vehicle A is an example of a moving body. The engine 2 is an example of a power source of the moving body. As another example of the power source of the moving body, for example, a motor is exemplified.

### Industrial Applicability

With the control device, the transport refrigeration system, and the control method described above, in the transport refrigeration system having, as a power supply, a power generator that generates power by the drive of the power source of the moving body, and the secondary battery, even in a situation in which the power stored in the secondary battery is used, it is possible to extend the operation time without degrading the refrigeration ability.

### Reference Signs List

A: vehicle
2: engine
3: cold insulation storage
10, 11: power generator
20, 21: battery for refrigerator
22: voltage sensor
23: current sensor
24: temperature sensor
30: refrigeration unit
31: converter
32: inverter
33: refrigerator
34: electric compressor
40: controller
41: sensor information acquisition unit
42: charging rate estimation unit
43: generated power calculation unit
44: load power information acquisition unit
45: charging and discharging control unit
46: target load setting unit
47: input unit
48: refrigerator control unit
49: storage unit

## Claims

1. A control device for a refrigerator (33) having, as a power supply, a power generator (10, 11) that is driven by an engine or a motor which is a power source of a moving body, and a battery (20, 21) that stores power generated by the power generator (10, 11),
wherein, in a case where the power generated by the power generator (10, 11) is smaller than a load requested by the refrigerator (33), supply of the power stored in the battery (20, 21) to the refrigerator (33) is started in a case where a state of charge (SOC) of the battery (20, 21) is equal to a predetermined first threshold value or more, and the supply of the power from the battery (20, 21) for covering shortage of the power generated by the power generator (10, 11) with respect to the load is permitted until the SOC reaches a predetermined second threshold value,
wherein, in a case where the supply of the power from the battery (20, 21) to the refrigerator (33) is performed, the load requested by the refrigerator (33) is reduced when the state of charge (SOC) of the battery (20, 21) becomes smaller than a predetermined second threshold value, and
wherein, in a case of reducing the load, the load is reduced such that an amount of power consumed by the load becomes smaller than an amount of power generated by the power generator (10, 11), and a surplus of the power generated by the power generator (10, 11) is supplied to charge the battery (20, 21) until the state of charge (SOC) of the battery (20, 21) recovers to the first threshold, then the load requested by the refrigerator (33) is returned to an original value before reduction when the SOC recovers to the first threshold.

2. The control device according to claim 1,
wherein, in a case where the supply of the power from the battery (20, 21) to the refrigerator (33) is performed, the supply of the power from the battery (20, 21) to the refrigerator (33) is stopped when the state of charge (SOC) of the battery (20, 21) becomes smaller than a predetermined second threshold value.

3. The control device according to claim 1 or 2,
wherein, in a case of reducing the load, the load is set such that a charging current of the battery (20, 21) has a predetermined value.

4. The control device according to any one of claims 1 to 3,
wherein, in a case of reducing the load, the load is set based on a temperature of a cold insulation storage (3) cooled by the refrigerator (33).

5. The control device according to any one of claims 1 to 4,
wherein, in a case where the supply of the power from the battery (20, 21) to the refrigerator (33) is not performed, a surplus of the power generated by the power generator (10, 11) is supplied to charge the battery (20, 21).

6. The control device according to any one of claims 1 to 5,
wherein the state of charge (SOC) of the battery (20, 21) is calculated based on a charging and discharging current from the battery (20, 21).

7. The control device according to claim 6,
wherein the state of charge (SOC) is calculated by integrating the charging and discharging current according to a state of charge (SOC) based on an open circuit voltage measured in a case where an operation of the refrigerator (33) is stopped.

8. The control device according to claim 6 or 7,
wherein the state of charge (SOC) is corrected based on a temperature of the battery (20, 21).

9. A transport refrigeration system comprising:
a power generator (10, 11) that is driven by an engine or a motor which is a power source of a moving body;
a battery (20, 21) that stores power generated by the power generator (10, 11);
a refrigerator (33) that has the power generator (10, 11) and the battery (20, 21) as a power supply; and
the control device according to any one of claims 1 to 8.

10. The transport refrigeration system according to claim 9, further comprising:
means for charging the battery (20, 21) with power supplied from an external power supply and supplying power to the refrigerator (33).

11. A control method for a refrigerator (33) comprising the step of providing the control device according to claim 1,
wherein, in a case where the power generated by the power generator (10, 11) is smaller than a load requested by the refrigerator (33), supply of the power stored in the battery (20, 21) to the refrigerator (33) is started when a state of charge (SOC) of the battery (20, 21) is equal to the predetermined first threshold value or more, and the supply of the power from the battery (20, 21) for covering shortage of the power generated by the power generator (10, 11) with respect to the load is permitted until the state of charge (SOC) reaches the predetermined second threshold value,
wherein, in a case where the supply of the power from the battery (20, 21) to the refrigerator (33) is performed, the load requested by the refrigerator (33) is reduced when the state of charge (SOC) of the battery (20, 21) becomes smaller than a predetermined second threshold value, and
wherein, in a case of reducing the load, the load is reduced such that an amount of power consumed by the load becomes smaller than an amount of power generated by the power generator (10, 11), and a surplus of the power generated by the power generator (10, 11) is supplied to charge the battery (20, 21) until the state of charge (SOC) of the battery (20, 21) recovers to the first threshold, then the load requested by the refrigerator (33) is returned to an original value before reduction when the state of charge (SOC) recovers to the first threshold.

## Patentansprüche

1. Steuervorrichtung für einen Kühlschrank (33), die als Stromversorgung einen Leistungsgenerator (10, 11), der von einer Antriebsmaschine oder einem Motor angetrieben wird, welcher eine Stromquelle eines sich bewegenden Körpers ist, und eine Batterie (20, 21) aufweist, die von dem Leistungsgenerator (10, 11) erzeugte Leistung speichert,
wobei, wenn die durch den Leistungsgenerator (10, 11) erzeugte Leistung geringer ist als eine von dem Kühlschrank (33) angeforderte Last, die Zufuhr der in der Batterie (20, 21) gespeicherten Leistung zu dem Kühlschrank (33) gestartet wird, wenn der Ladezustand (SOC) der Batterie (20, 21) gleich oder größer als ein erster vorbestimmter Schwellenwert ist, und die Zufuhr von Leistung aus der Batterie (20, 21) zur Abdeckung eines Defizits der vom Leistungsgenerator (10, 11) erzeugten Leistung gegenüber der Last erlaubt ist, bis der Ladezustand (SOC) einen zweiten vorbestimmten Schwellenwert erreicht,
wobei, wenn die Leistung von der Batterie (20, 21) dem Kühlschrank (33) zugeführt wird, die vom Kühlschrank (33) angeforderte Last reduziert wird, wenn der Ladezustand (SOC) der Batterie (20, 21) unter den zweiten Schwellenwert fällt, und
wobei im Falle einer Lastreduktion die Last so verringert wird, dass die von der Last verbrauchte Leistung geringer ist als die vom Leistungsgenerator (10, 11) erzeugte Leistung, und ein Leistungsüberschuss des Leistungsgenerators (10, 11) dazu verwendet wird, die Batterie (20, 21) zu laden, bis der Ladezustand (SOC) der Batterie (20, 21) wieder den ersten Schwellenwert erreicht, wobei anschließend die vom Kühlschrank (33) angeforderte Last auf ihren ursprünglichen Wert vor der Reduktion zurückgesetzt wird, wenn sich der Ladezustand (SOC) auf den ersten Schwellenwert erholt hat.

2. Steuervorrichtung gemäß Anspruch 1, wobei, wenn die Stromversorgung des Kühlschranks (33) durch die Batterie (20, 21) erfolgt, diese Stromversorgung unterbrochen wird, wenn der Ladezustand (SOC) der Batterie (20, 21) unter den zweiten vorbestimmten Schwellenwert fällt.

3. Steuervorrichtung gemäß Anspruch 1 oder 2, wobei im Falle einer Lastreduktion die Last so eingestellt wird, dass ein Ladestrom der Batterie (20, 21) einen vorbestimmten Wert erreicht.

4. Steuervorrichtung gemäß einem der Ansprüche 1 bis 3, wobei im Falle einer Lastreduktion die Last in Abhängigkeit von der Temperatur eines Kalt-Isolationsspeichers (3), der durch den Kühlschrank (33) gekühlt wird, geregelt wird.

5. Steuervorrichtung gemäß einem der Ansprüche 1 bis 4, wobei, wenn keine Stromzufuhr vom der Batterie (20, 21) zum Kühlschrank (33) erfolgt, ein Leistungsüberschuss des Leistungsgenerators (10, 11) dazu verwendet wird, die Batterie (20, 21) zu laden.

6. Steuervorrichtung gemäß einem der Ansprüche 1 bis 5, wobei der Ladezustand (SOC) der Batterie (20, 21) auf Grundlage eines Lade- und Entladestroms der Batterie (20, 21) berechnet wird.

7. Steuervorrichtung gemäß Anspruch 6, wobei der Ladezustand (SOC) durch Integration des Lade- und Entladestroms unter Bezugnahme auf einen Ladezustand (SOC), der auf einer Leerlaufspannung basiert, berechnet wird, die im Fall eines gestoppten Betriebs des Kühlschranks (33) gemessen wird.

8. Steuervorrichtung gemäß Anspruch 6 oder 7, wobei der Ladezustand (SOC) in Abhängigkeit von der Temperatur der Batterie (20, 21) korrigiert wird.

9. Transportkühlsystem, umfassend:
einen Leistungsgenerator (10, 11), der von einer Antriebsmaschine oder einem Motor angetrieben wird, welcher eine Stromquelle eines sich bewegenden Körpers ist;
eine Batterie (20, 21), die die durch den Leistungsgenerator (10, 11) erzeugte Leistung speichert;
einen Kühlschrank (33), der den Leistungsgenerator (10, 11) und die Batterie (20, 21) als Stromversorgung verwendet; und
eine Steuervorrichtung gemäß einem der Ansprüche 1 bis 8.

10. Transportkühlsystem gemäß Anspruch 9, weiterhin umfassend:
Mittel zum Laden der Batterie (20, 21) mit von einer externen Stromversorgung bereitgestelltem Strom und zur Versorgung des Kühlschranks (33) mit Strom.

11. Steuerverfahren für einen Kühlschrank (33), umfassend den Schritt des Bereitstellens der Steuervorrichtung gemäß Anspruch 1,
wobei, wenn die durch den Leistungsgenerator (10, 11) erzeugte Leistung geringer ist als eine vom Kühlschrank (33) angeforderte Last, die Zufuhr der in der Batterie (20, 21) gespeicherten Leistung zum Kühlschrank (33) gestartet wird, wenn der Ladezustand (SOC) der Batterie (20, 21) gleich oder größer als der erste vorbestimmte Schwellenwert ist, und die Zufuhr der Leistung von der Batterie (20, 21) zur Deckung eines Defizits der vom Leistungsgenerator (10, 11) erzeugten Leistung erlaubt ist, bis der Ladezustand (SOC) den zweiten Schwellenwert erreicht,
wobei, wenn die Leistung von der Batterie (20, 21) dem Kühlschrank (33) zugeführt wird, die vom Kühlschrank (33) angeforderte Last reduziert wird, wenn der Ladezustand (SOC) der Batterie (20, 21) unter den zweiten Schwellenwert fällt, und
wobei im Falle einer Lastreduktion die Last so verringert wird, dass die von der Last verbrauchte Leistung geringer ist als die vom Leistungsgenerator (10, 11) erzeugte Leistung, und ein Leistungsüberschuss des Leistungsgenerators (10, 11) verwendet wird, um die Batterie (20, 21) aufzuladen, bis sich der Ladezustand (SOC) auf den ersten Schwellenwert erholt, woraufhin die vom Kühlschrank (33) angeforderte Last auf ihren ursprünglichen Wert vor der Reduktion zurückgesetzt wird.

## Revendications

1. Dispositif de commande pour un réfrigérateur (33) ayant, comme alimentation électrique, un générateur d'énergie (10, 11) qui est entraîné par un moteur ou un moteur qui est une source d'énergie d'un corps mobile, et une batterie (20, 21) qui stocke l'énergie générée par le générateur d'énergie (10, 11),
dans lequel, dans le cas où l'énergie générée par le générateur d'énergie (10, 11) est inférieure à une charge demandée par le réfrigérateur (33), l'alimentation du réfrigérateur (33) par l'énergie stockée dans la batterie (20, 21) est démarrée dans le cas où un état de charge (SOC) de la batterie (20, 21) est égal ou supérieur à une première valeur de seuil prédéterminée, et l'alimentation en énergie de la batterie (20, 21) pour couvrir le manque d'énergie générée par le générateur d'énergie (10, 11) par rapport à la charge est autorisée jusqu'à ce que le SOC atteigne une seconde valeur de seuil prédéterminée,
dans lequel, dans le cas où l'alimentation en énergie de la batterie (20, 21) vers le réfrigérateur (33) est effectuée, la charge demandée par le réfrigérateur (33) est réduite lorsque le état de charge (SOC) de la batterie (20, 21) devient inférieur à la deuxième valeur de seuil prédéterminée, et
dans lequel, en cas de réduction de la charge, la charge est réduite de telle sorte qu'une quantité d'énergie consommée par la charge devienne inférieure à une quantité d'énergie générée par le générateur d'énergie (10, 11), et un surplus d'énergie générée par le générateur d'énergie (10, 11) est fourni pour charger la batterie (20, 21) jusqu'à ce que l'état de charge (SOC) de la batterie (20, 21) revienne à la première valeur de seuil, puis la charge demandée par le réfrigérateur (33) est ramenée à une valeur initiale avant la réduction lorsque le SOC revient à la première valeur de seuil.

2. Dispositif de commande selon la revendication 1,
dans lequel, dans le cas où l'alimentation du réfrigérateur (33) par la batterie (20, 21) est effectuée, l'alimentation du réfrigérateur (33) par la batterie (20, 21) est arrêtée lorsque l'état de charge (SOC) de la batterie (20, 21) devient inférieur à la deuxième valeur de seuil prédéterminée.

3. Dispositif de commande selon la revendication 1 ou 2,
dans lequel, en cas de réduction de la charge, la charge est réglée de telle sorte qu'un courant de charge de la batterie (20, 21) ait une valeur prédéterminée.

4. Dispositif de commande selon l'une quelconque des revendications 1 à 3,
dans lequel, en cas de réduction de la charge, la charge est réglée en fonction de la température d'un accumulateur de froid (3) refroidi par le réfrigérateur (33).

5. Dispositif de commande selon l'une quelconque des revendications 1 à 4,
dans lequel, dans le cas où l'alimentation électrique du réfrigérateur (33) par la batterie (20, 21) n'est pas effectuée, un surplus d'énergie générée par le générateur d'énergie (10, 11) est fourni pour charger la batterie (20, 21).

6. Dispositif de commande selon l'une quelconque des revendications 1 à 5,
dans lequel l'état de charge (SOC) de la batterie (20, 21) est calculé sur la base d'un courant de charge et de décharge de la batterie (20, 21).

7. Dispositif de commande selon la revendication 6,
dans lequel l'état de charge (SOC) est calculé en intégrant le courant de charge et de décharge en fonction d'un état de charge (SOC) basé sur une tension en circuit ouvert mesurée dans le cas où le fonctionnement du réfrigérateur (33) est arrêté.

8. Dispositif de commande selon la revendication 6 ou 7,
dans lequel l'état de charge (SOC) est corrigé en fonction de la température de la batterie (20, 21).

9. Système de réfrigération pour le transport comprenant : ^ un générateur de puissance (10, 11) qui est entra né par un moteur ou un moteur qui est une source d'énergie d'un corps mobile ;
une batterie (20, 21) qui stocke l'énergie générée par le générateur de puissance (10, 11) ;
un réfrigérateur (33) qui a le générateur de puissance (10, 11) et la batterie (20, 21) comme alimentation électrique ; et
le dispositif de commande selon l'une quelconque des revendications 1 à 8.

10. Le système de réfrigération pour le transport selon la revendication 9, comprenant en outre :
des moyens pour charger la batterie (20, 21) avec de l'énergie fournie par une source d'alimentation externe et pour alimenter le réfrigérateur (33).

11. Procédé de commande d'un réfrigérateur (33) comprenant l'étape consistant à fournir le dispositif de commande selon la revendication 1,
dans lequel, dans le cas où l'énergie générée par le générateur d'énergie (10, 11) est inférieure à une charge demandée par le réfrigérateur (33), l'alimentation du réfrigérateur (33) par l'énergie stockée dans la batterie (20, 21) est démarrée lorsque l'état de charge (SOC) de la batterie (20, 21) est égal ou supérieur à la première valeur de seuil prédéterminée, et l'alimentation en énergie de la batterie (20, 21) pour couvrir le manque d'énergie générée par le générateur d'énergie (10, 11) est autorisée jusqu'à ce que l'état de charge (SOC) atteigne la deuxième valeur de seuil prédéterminée,
dans lequel, dans le cas où l'alimentation en énergie de la batterie (20, 21) vers le réfrigérateur (33) est effectuée, la charge demandée par le réfrigérateur (33) est réduite lorsque l'état de charge (SOC) de la batterie (20, 21) devient inférieur à la deuxième valeur de seuil prédéterminée, et
dans lequel, en cas de réduction de la charge, la charge est réduite de telle sorte que la quantité d'énergie consommée par la charge devienne inférieure à la quantité d'énergie générée par le générateur d'énergie (10, 11), et un surplus d'énergie générée par le générateur d'énergie (10, 11) est fourni pour charger la batterie (20, 21) jusqu'à ce que l'état de charge (SOC) de la batterie (20, 21) revienne à la première valeur de seuil, puis la charge demandée par le réfrigérateur (33) est ramenée à la valeur initiale avant la réduction lorsque l'état de charge (SOC) revient à la première valeur de seuil.
